# FASCICULE DE BREVET EUROPEEN

(11) **EP 3 083 407 B1**
(45) Date de publication et mention de la délivrance du brevet: **13.06.2018**
(21) Numéro de dépôt: 14814891.9
(22) Date de dépôt: 18.12.2014
(51) Int. Cl.: B64G 1/40, B64G 1/22, B64G 1/62, B64G 1/44, B64G 1/66

(54) **VOILURE GONFLABLE DEPLOYABLE**
ENTFALTBARER AUFBLASBARER FLÜGEL
DEPLOYABLE INFLATABLE WING

(30) Priorité: 20.12.2013 FR 1363167
(43) Date de publication de la demande: 26.10.2016
(73) Titulaire: ArianeGroup SAS, 75015 Paris (FR)
(72) Inventeur: CECCHINI, Guillaume, F-33290 Blanquefort (FR); GUENAT, Hervé, F-33320 Le Taillan-Medoc (FR); MAHY, Claude-Emile, F-33200 Cauderan (FR)
(74) Mandataire: Schmit, Christian Marcel Jean
(86) Numéro de dépôt international: PCT/EP2014/078562
(87) Numéro de publication internationale: WO 2015/091858

(56) Documents cités:
- WO-A1-2008/006835
- WO-A2-00/61894
- CH-A5- 666 235
- DE-A1- 19 825 785
- US-B1- 6 568 640
- US-B1- 6 585 193

## Description

### Arrière plan de l'invention

### Domaine de l'invention

La présente invention concerne le domaine des structures ultralégères pouvant être embarquées sur des satellites ou des stations spatiales. Plus précisément la présente invention concerne une voilure constituée par une membrane qui se déploie par gonflage de membrures à partir d'un état plié.

### Arrière plan technologique

Des structures se déployant par gonflage sont connues dans le domaine spatial et par exemple le document US 5 311 706 A décrit diverses géométries de structures gonflables spatiales ultra légères dites structures gossamer.

Le document WO2006/024805 décrit une paroi multicouche pour une structure d'un dispositif gossamer gonflable et le document WO2007/096289 décrit une voile d'aérofreinage se déployant à l'aide d'un mât gonflable.

Le brevet américain US 6 585 193 décrit une membrane apte à être déployée et reliée à des éléments gonflables par une extrémité desdits éléments gonflables. Il est considéré comme l'art antérieur le plus proche.

### Brève description de l'invention

La présente invention vise à réaliser une voilure compacte lorsque elle est pliée, qui se déploie facilement et qui ne risque pas de se bloquer ou de s'emmêler lors de son déploiement.

Pour ce faire, la présente invention propose une voilure spatiale réalisée au moyen d'une membrane formant une surface polygonale pourvue d'une structure gonflable pour laquelle la structure gonflable comporte des membrures s'étendant sur la membrane selon des diagonales de la membrane et passant par un point central de la membrane.

La structure gonflable comporte au moins une bandelette de film dont le pourtour est collé sur la membrane en sorte de former avec la membrane un volume gonflable. Ce volume gonflable va réaliser les membrures d'extension de la membrane.

Selon un premier mode de réalisation, la membrane polygonale est dépliée au moyen d'une structure gonflable comportant au moins deux bandelettes de film, une première bandelette étant collée sur une première face de la membrane sur une première diagonale de la membrane, ladite première bandelette et la membrane sous cette bandelette formant un premier boudin gonflable, et une seconde bandelette étant collée sur une seconde face de la membrane opposée à ladite première face sur une ou plusieurs secondes diagonales de la membrane, la seconde bandelette et la membrane sous cette bandelette formant un second boudin gonflable.

Avantageusement, la membrane est percée au centre du polygone pour mettre en communication les premier et second boudins gonflables.

Selon un mode de réalisation particulier, au moins une bandelette de film comporte une découpe en croix collée sur une face de la membrane sur des diagonales de la membrane, ladite bandelette en croix et la membrane sous cette bandelette formant un boudin gonflable.

Selon un mode de réalisation particulier, la structure gonflable est réalisée à partir d'une membrane carrée et comporte deux bandelettes de film, une première bandelette étant collée sur une première face de la membrane sur une première diagonale de la surface carrée, ladite première bandelette et la membrane sous cette bandelette formant un premier boudin gonflable, et une seconde bandelette étant collée sur une seconde face de la membrane opposée à ladite première face sur la seconde diagonale de la surface carrée, la seconde bandelette et la membrane sous cette bandelette formant un second boudin gonflable.

Selon un second mode de réalisation, la structure gonflable à membrane carrée est réalisée avec une bandelette de film en croix collée sur une face de la membrane sur les diagonales de la surface carrée, ladite bandelette en croix et la membrane sous cette bandelette formant un boudin gonflable.

Avantageusement, la structure gonflable comporte un dispositif de gonflage au centre de la structure gonflable.

Plus particulièrement, le dispositif de gonflage comporte une valve ainsi qu'un embout tubulaire perpendiculaire à la membrane et qui se fixe sur une bandelette.

L'embout tubulaire prolonge avantageusement un mât télescopique de déploiement de la voilure.

La voilure est par exemple un constituant d'une antenne, d'un panneau solaire, d'une voile d'aérofreinage, d'une voile solaire, d'un pare-soleil d'un engin spatial.

L'invention concerne en outre un procédé de pliage d'une voilure spatiale réalisée au moyen d'une membrane formant une surface polygonale solidaire d'une structure gonflable pour laquelle la structure gonflable comprend plusieurs bandes s'étendant le long de diagonales de la membrane, le procédé comprenant une première succession de pliages en zigzag de la membrane parallèlement à une première diagonale de la membrane jusqu'à réaliser une bande autour de ladite première diagonale puis une seconde succession de pliages en zigzag de la membrane perpendiculairement à ladite première diagonale jusqu'à laisser apparente une surface de recouvrement des bandelettes sur la membrane, ladite surface de recouvrement étant porteuse d'un embout de gonflage du dispositif.

Selon un premier mode de réalisation, la première succession de pliages se faisant parallèlement à la première diagonale, commence par le pliage en zigzag d'une première aile de la membrane d'un premier côté de ladite première diagonale au moyen de pliages qui replient ladite aile sur une bande de la largeur de la bandelette autour de ladite première diagonale et se termine par le pliage en zigzag de la seconde aile de l'autre côté de la première diagonale au moyen de pliages qui replient la seconde aile par dessus la première aile repliée.

Selon un deuxième mode de réalisation, la première succession de pliages est réalisée parallèlement à l'axe de la première diagonale et les ailes sont pliées ensemble en zigzag.

Selon un troisième mode de réalisation pour lequel un pas correspond à la largeur d'une bandelette disposée sur la première diagonale, la première succession de pliages comporte le pliage d'une première aile selon des plis en zigzag parallèles à la première diagonale sur une bande de largeur 1/2 pas d'un premier côté de la première diagonale, la première succession de pliages comportant le pliage d'une seconde aile selon des plis en zigzag sur une bande de largeur 1/2 pas d'un second côté de la première diagonale de sorte que les deux ailes soient pliées côte à côte.

Selon un premier mode de réalisation, la seconde succession de pliages est réalisée perpendiculairement à la première diagonale, des bras de la bande de part et d'autre de la seconde diagonale étant pliés ensemble en zigzag.

La seconde succession de pliages est selon une première variante réalisée parallèlement à la seconde diagonale et comporte le pliage d'un premier bras selon des plis en zigzag puis le pliage d'un un second bras selon des plis en zigzag sur le premier bras.

Selon une seconde variante, la seconde succession de pliages comporte un pliage séparé en parallèle de bras de part et d'autre de la première diagonale selon des plis en zigzag.

### Brève description des dessins

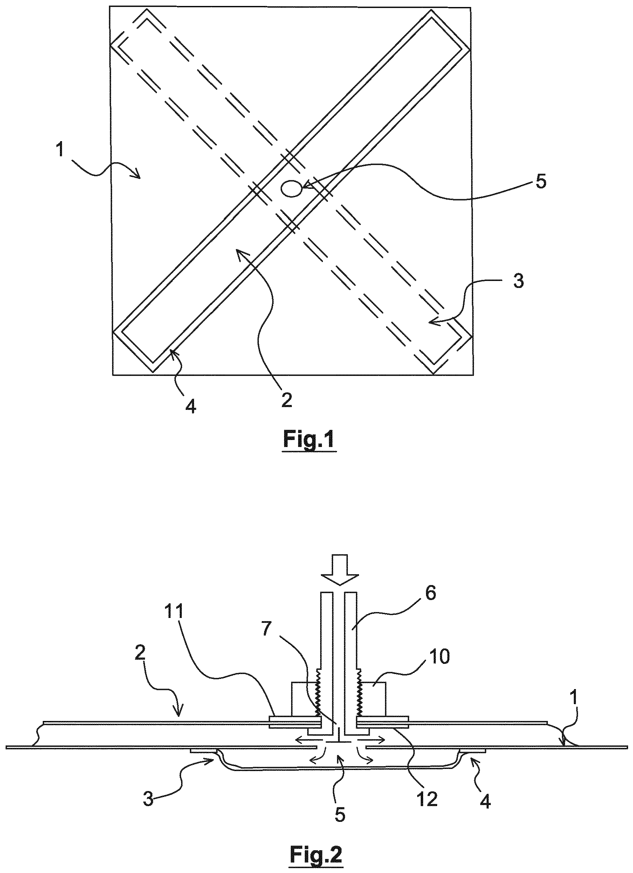

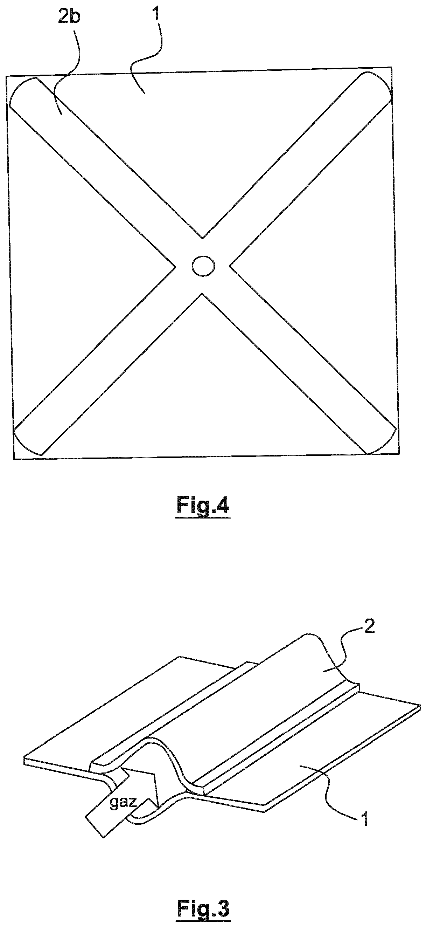

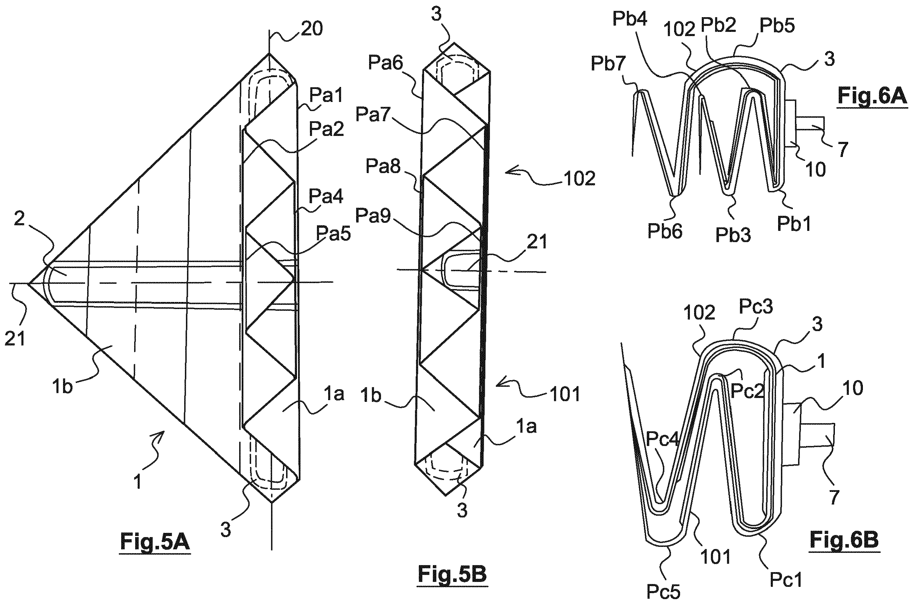

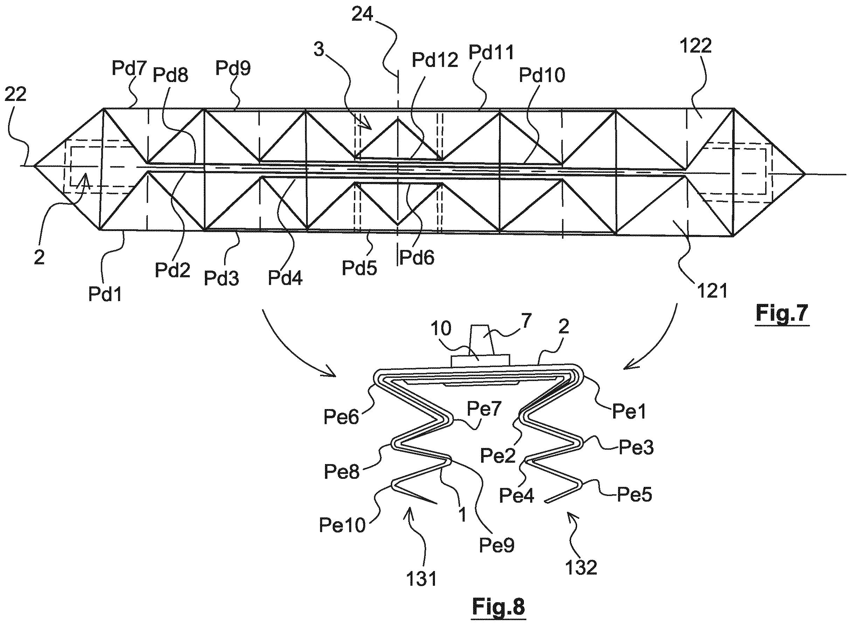

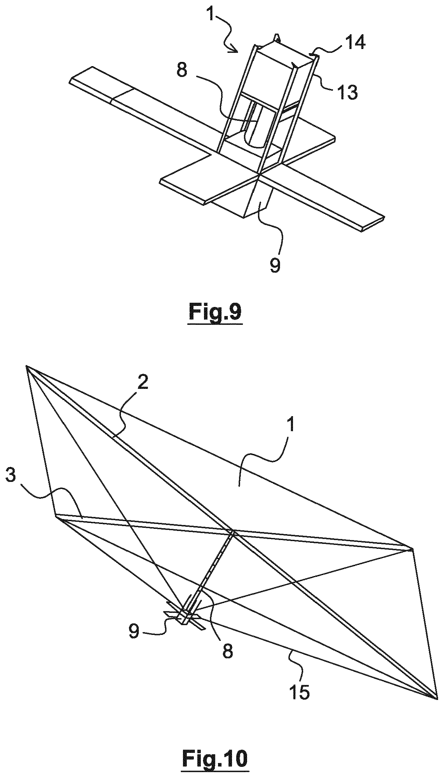

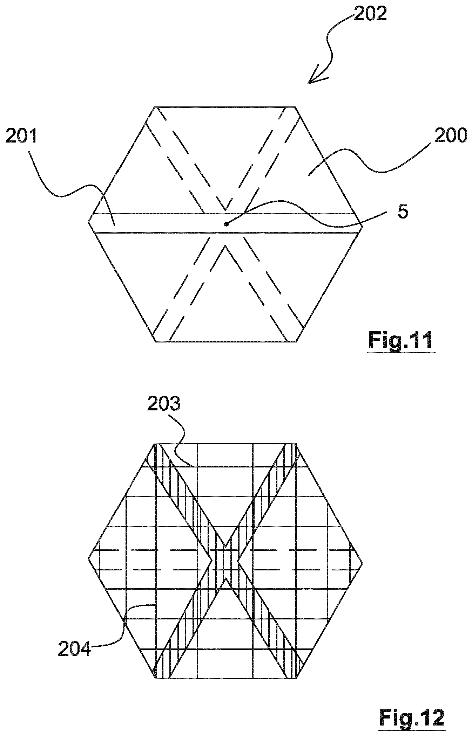

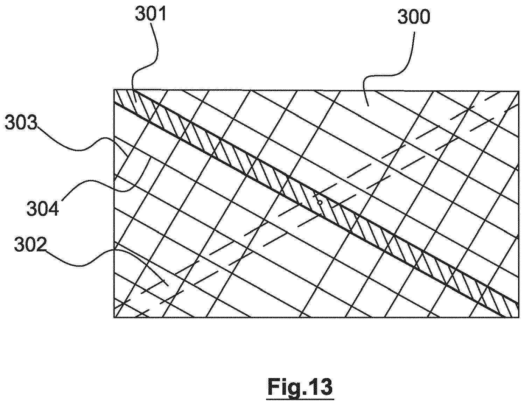

D'autres caractéristiques et avantages de l'invention seront apparents à la lecture de la description qui suit d'un exemple non limitatif de réalisation de l'invention en référence aux dessins qui représentent:
en figure 1: une vue de dessus d'une premier mode de réalisation d'une voilure de l'invention;
en figure 2: une vue de côté en coupe d'une partie centrale de la voilure de la figure 1 ;
en figure 3: un détail d'une structure gonflable de la voilure de l'invention;
en figure 4: une vue de dessus d'un second mode de réalisation d'une voilure de l'invention;
aux figures 5A, 5B: une vue de dessous de deux étapes d'un premier mode de réalisation d'une première succession de pliages de la voilure de l'invention;
aux figures 6A, 6B: des vues de côté de deux alternatives d'une seconde succession de pliages de la voilure de l'invention;
en figure 7: une vue de dessous d'un second mode de réalisation d'une première succession de pliages de la voilure de l'invention;
en figure 8: une vue de côté d'un troisième mode de réalisation d'une seconde succession de pliages de la voilure de l'invention;
en figure 9: une vue en perspective d'un exemple de satellite équipé d'une voilure selon l'invention repliée;
en figure 10: une vue en perspective du satellite de la figure 9 voilure déployée;
en figure 11 : une vue de dessus d'un exemple de voile polygonale;
en figure 12: une vue de dessous de la voile de la figure 11 sur laquelle sont matérialisés des traits de pliage;
en figure 13: une vue de dessus d'une voile rectangulaire sur laquelle sont matérialisés des traits de pliage.

### Description détaillée de modes de réalisation de l'invention.

La présente invention concerne les dispositifs à membranes qui se déploient par gonflage dans l'espace.

Ces dispositifs comportent une membrane qui est préalablement repliée lors du lancement du satellite ou véhicule spatial et qui se déplie une fois le véhicule dans l'espace de manière à obtenir une surface importante telle que par exemple une voile plane d'aérofreinage de satellite, une voile solaire ou un panneau solaire.

L'avantage de tels dispositifs est qu'aucun élément extérieur à la voile autre qu'un système de gonflage n'intervient dans le déploiement de la voile.

Un objectif particulier de l'invention est que la surface pliée prenne le moins de place possible tout en garantissant un déploiement complet avec un fort taux de réussite du déploiement.

Un exemple particulier de réalisation de l'invention est une voile de désorbitation pour satellite carrée et pliée en zigzag selon ses diagonales.

La voilure de l'invention représentée en figure 1 est une voilure spatiale réalisée au moyen d'une membrane 1 formant une surface carrée. La membrane peut notamment être réalisée avec un film de polyimide développé par la société DuPont et commercialisé sous la marque Kapton de 7,5 µm d'épaisseur, avec un revêtement de protection contre l'oxygène atomique de type SiOx, avec x compris entre 1 et 2.

Elle est pourvue d'une structure gonflable qui s'étend le long des diagonales de la membrane.

La structure gonflable de la figure 1 comporte deux bandelettes de film 2, 3 dont le pourtour 4 est collé sur la membrane en sorte de former avec la membrane un volume gonflable représenté notamment à la figure 3. Les bandelettes seront aussi réalisées avec un film polyimide connu sous la marque Kapton.

Une première bandelette 2 est collée sur une première face de la membrane 1, par exemple la face supérieure selon la figure, sur une première diagonale de la surface carrée, ladite première bandelette 2 et la membrane 1 sous cette bandelette formant un premier boudin gonflable.

Le collage du pourtour 4 de la bandelette sur la membrane est par exemple réalisé avec un adhésif de type CV 1142 de la société Nusil.

Une seconde bandelette 3 représentée en pointillés est collée sur la face inférieure de la membrane 1 opposée à ladite première face sur la seconde diagonale de la surface carrée.

La seconde bandelette 3 et la membrane 1 sous cette bandelette forme un second boudin gonflable.

Pour assurer une communication entre les boudins gonflables et permettre un gonflage au niveau d'un point d'entrée de gaz unique la membrane 1 est percée au centre du carré 5 pour mettre en communication les premier et second boudins gonflables.

La figure 4 est une réalisation alternative pour laquelle la structure gonflable est réalisée avec une bandelette de film en croix 2b collée sur les diagonales de la surface carrée de la membrane 1.

La bandelette en croix 2b et la membrane 1 sous cette bandelette forment un boudin gonflable unique d'un seul côté de la membrane.

Selon la figure 2, la structure gonflable comporte un interface de gonflage 7 au centre de la surface carrée. Cet interface peut être notamment une valve.

La valve de gonflage est ici une valve qui ne laisse passer le gaz que dans le sens du gonflage de la structure gonflable.

La valve 7 est disposée au bout d'un embout 6 pourvu d'un filetage de réception d'un écrou 10 qui fixe la valve 7 sur la première bandelette 2 ou dans le cas du mode de réalisation de la figure 4 sur la bandelette 2'.

Pour réaliser une étanchéité, des joints 11, 12 appuient de part et d'autre de la bandelette.

En réalisation alternative, un collage d'une collerette de la valve peut être prévu.

Comme représenté en figure 10, l'embout peut être disposé en prolongement d'un mât télescopique pour déployer la voilure à partir d'un engin spatial 9.

La figure 9 représente la voilure et le mât télescopique repliés, la voilure étant maintenue par des tiges 13 éventuellement pourvues d'ergots de retenue 14.

De retour à la figure 10, des suspentes ou haubans 15 peuvent éventuellement relier les angles de la voilure et le corps de l'engin spatial portant le mât et la voilure.

La voilure est par exemple un constituant d'une antenne, d'un panneau solaire, d'une voile d'aérofreinage ou d'une voile solaire d'un engin spatial.

Le pliage de la voilure spatiale comprend une première succession de pliages en accordéon ou zigzag de la membrane puis une seconde succession de pliages en accordéon de la membrane.

Le pliage de la membrane est fait en sorte de laisser apparent un carré central porteur de la valve 7 et se fait donc sur la face opposée à la face portant cette valve 7.

Les pliages se font parallèlement aux diagonales de la surface carrée de la membrane.

On appellera ailes les parties de membrane de part et d'autre de la première diagonale.

Selon l'exemple des figures 5A, 5B, la première succession de pliages Pa1 à Pa9 se fait parallèlement à une première diagonale 20. Elle commence par des pliages Pa1 à Pa5 réalisés en zigzag sur une aile 1a de la membrane 1 d'un premier côté de ladite première diagonale, cette aile étant repliée sur une bande de la largeur de la bandelette 3 autour de ladite diagonale.

Ensuite les pliages Pa6 à Pa9 de la seconde aile 1b de l'autre côté de la diagonale 20 sont réalisés par dessus la première aile repliée.

Selon la figure 6A une seconde succession de pliages est réalisée parallèlement à un axe 21 correspondant à la seconde diagonale et de la même façon un premier bras 101 est d'abord plié en zigzag selon des plis Pb1 à Pb4 puis un second bras 102 est lui même plié en zigzag sur le premier, la valve 7 restant dégagée du fait que tous les plis se font sur une face inférieure de la membrane.

Par ailleurs, la première succession de pliages comporte un premier pli au bord de la bandelette 3 de la structure gonflable, les pliages ultérieurs de la première succession de pliages laissant apparente ladite bandelette.

La seconde succession de pliages comporte un premier pli au bord d'une seconde bandelette de la structure gonflable, les pliages ultérieurs laissant apparent une surface centrale de la membrane, ladite surface centrale étant porteuse d'un embout de gonflage du dispositif.

Selon la figure 6B, la seconde succession de pliages est toujours réalisée parallèlement à l'axe de la diagonale 21 mais les bras 101, 102 sont pliés ensemble en zigzag, des premiers pliages Pc1 et Pc2 étant réalisés avec le bras 101 qui est recouvert par le bras 102 au niveau du pliage Pc3, le bras 102 étant ensuite replié en Pc4 et recouvert à son tour par le bras 101 plié en Pc 5.

Cette technique peut aussi être utilisée pour la première succession de pliages.

Selon la figure 7 une autre méthode est utilisée pour la première succession de pliages qui se fait sur une largeur correspondant à des demi pas, un pas étant la largeur de la bandelette 2.

La première succession de pliages part d'un premier pli Pd1 parallèle à la diagonale selon l'axe 22 par lequel un pan triangulaire 121 de la membrane est rabattu sur un second pan 122, le premier pli étant décalé d'un demi premier pas par rapport à la première diagonale puis comporte des plis en zigzag Pd2 à Pd6 sur une bande de largeur 1/2 pas d'un premier côté de la diagonale 22.

Il est réalisé de même avec le second pan triangulaire 122 pliés en zigzag selon les plis Pd7 à Pd12 de sorte que les deux pans sont pliés côte à côte.

La même méthode est employée pour la seconde succession de pliages, les bras 131 et 132 étant pliés parallèlement en zigzag selon les plis Pe1 à Pe10.

Ainsi pour la première succession de pliages parallèles à la première diagonale les parties ou ailes de chaque côté de ladite diagonale peuvent être pliées l'une après l'autre en Z comme aux figures 5A, 5B, l'une à côté de l'autre comme en figure 7 ou ensemble de manière similaire au mode de pliage de la figure 6B pour la secondes succession de pliages.

La seconde succession de pliages peut être réalisée à la manière de la figure 6A un bras 101 est plié en Z puis le second bras 102 est lui même plié en Z, de la figure 6B , les bras 101, 102 sont appliqués l'un sur l'autre et pliés ensemble en Z ou enfin à la manière de la figure 8 où les deux bras sont chacun pliés en Z en parallèle.

L'important est que la valve 7 soit toujours sur une surface dégagée au dessus des plis et que les plis soient perpendiculaires aux boudins dont le gonflage déplie la voilure.

Le pliage en zigzag ou double Z permet de ne pas emprisonner de gaz entre les plis et permet la mise sous vide du dispositif sans créer de poches de gaz.

Une fois pliée, la voile peut être stockée dans un espace réduit soumis au vide. Le déploiement de la voile est obtenu par simple gonflage de l'espace entre la voile et les bandelettes collées le long des diagonales.

La réalisation de la voilure comprend le collage du pourtour des bandelettes de gonflage à même la membrane formant la voilure suivant les diagonales de la voilure, ce collage membrane/bandelettes réalisant les vessies permettant le déploiement de la voilure.

Dans le cas de l'exemple de la figure 1, le collage des bandelettes de gonflage est fait de part et d'autre de la voile dans le but de faciliter la fabrication et d'améliorer l'étanchéité de la structure gonflable en réalisant une vessie sur la face supérieure et une vessie sur la face inférieure de la surface plane.

Ensuite est réalisé le pliage et a combinaison du pliage double Z suivant les diagonales et le collage des vessies au niveau des diagonales permet un déploiement en deux temps sans blocage de la voilure du fait que la première vessie se gonfle et déplie le premier Z puis la seconde vessie se gonfle pour déplier le second Z.

Dans le premier temps la seconde vessie ne se gonfle pas à cause de la géométrie du premier Z qui empêche le gonflement du second Z.

Un exemple de réalisation est une voile de désorbitation par aérofreinage d'un satellite de type Cubesat, petit satellite construit à l'aide d'éléments de 10x10x10cm de côtés couramment utilisé par les universitaires de tous pays.

La voile de désorbitation est constituée par une membrane carrée de 5m x 5m, qui sera stockée dans un cube de 10x10x10cm de côté

La réalisation commence par la découpe de la membrane carrée de 5m x 5m puis par le tracé des plis le long des diagonales.

Ensuite, un patch en ruban adhésif est posé au centre de la voile et un trou de diamètre d'environ 8mm est percé au centre du patch.

La réalisation continue par la découpe d'une bandelette 3 de 1,2m de long et le collage de cette bandelette sur une diagonale sur une face inférieure de la membrane.

Ensuite on procède à la découpe d'une seconde bandelette 2, identique à la première, on perce un trou d'environ 8 mm au milieu de cette bandelette pour positionner une valve de gonflage 7 au niveau de ce trou dans la seconde bandelette, la seconde bandelette est alors collée sur le côté supérieur de la membrane 1 le long de la diagonale laissée libre.

Une fois la voile terminée, il est procédé au pliage en double Z suivant le tracé des plis parallèles aux diagonales de la voile puis à la fixation de l'embout 6 de la valve 7 au bout du bras télescopique 8 rigide.

La voile se fixe ainsi au bout d'un unique mât rigide ce qui est un avantage de l'invention.

L'invention s'applique plus généralement à une membrane polygonale munie de boudins gonflables pour laquelle deux directions de pliage seront définies selon la position des boudins.

Le type de polygone utilisable est un polygone convexe pour lequel les bandelettes s'étendent sur des diagonales passant par le centre du polygone ou par un point de croisement unique.

Les boudins gonflables s'étendent en direction des sommets du polygone formé par la membrane pour la déplier progressivement.

La figure 11 correspond à un exemple de membrane hexagonale 200 comportant un premier boudin 201 sur une première face de la membrane et reliant deux sommets opposés de l'hexagone par rapport au centre de la membrane et un second boudin 202 en croix sur une seconde face de la membrane et rejoignant les quatre autres sommets de l'hexagone.

Dans ce cas le pliage est représenté en figure 12 et des premiers plis 203 représentés par des lignes parallèles au premier boudin 201 permettent de remplier les côtés de part et d'autre du premier boudin selon un axe intermédiaire entre les axes des boudins en croix alors que des seconds plis 204 perpendiculaires à la direction du premier boudin permettent de replier la voile dans l'axe du premier boudin.

Le dépliage se fera préférentiellement selon les plis réalisés en dernier selon le boudin le moins contraint par le pliage.

La figure 13 correspond à une voile rectangulaire 300 munie de deux boudins gonflables 301 et 302 selon deux diagonales.

Pour cette réalisation des premiers plis 303 perpendiculaires au premier boudin 301 donnent une première direction de pliage.et des seconds plis parallèles au premier boudin 301 donnent une seconde direction de pliage. Dans cet exemple de réalisation, les seconds plis ne sont pas orientés à 90° du second boudin qui se dépliera de manière moins régulière que pour une voile carrée par exemple.

L'invention peut s'appliquer en outre aux voiles solaire, aux panneaux solaires souples, aux écrans solaires ou autre dispositifs plans déployés dans l'espace.

Pendant le vol, la voile est maintenue tendue par exemple en maintenant une légère pression dans les boudins.

Pour des utilisation plus longues, on pourra utiliser des techniques connues de rigidification sans maintien de la pression, comme par exemple celle consistant à utiliser des membranes pourvues d'un film d'aluminium.

## Revendications

1. Voilure spatiale réalisée au moyen d'une membrane formant une surface polygonale (1, 200, 300) pourvue d'une structure gonflable (1, 2, 3, 201, 202, 301, 302) qui comporte des membrures s'étendant sur la membrane selon des diagonales de la membrane et passant par un point central de la membrane, **caractérisée en ce que** la structure gonflable comporte au moins une bandelette de film (2, 3, 201, 202, 301, 302) dont le pourtour est collé sur la membrane en sorte de former avec la membrane un volume gonflable et de réaliser les membrures d'extension de la membrane.

2. Voilure spatiale selon la revendication 1 pour laquelle la membrane polygonale est dépliée au moyen d'une structure gonflable comportant au moins deux bandelettes de film, une première bandelette (2, 201, 301) étant collée sur une première face de la membrane sur une première diagonale de la membrane, ladite première bandelette et la membrane sous cette bandelette formant un premier boudin gonflable, et une seconde bandelette (3, 202, 302) étant collée sur une seconde face de la membrane opposée à ladite première face sur une ou plusieurs secondes diagonales de la membrane, la seconde bandelette et la membrane sous cette bandelette formant un second boudin gonflable.

3. Voilure spatiale selon la revendication 1 ou 2 pour laquelle la membrane est percée au centre du polygone pour mettre en communication les premier et second boudins gonflables.

4. Voilure spatiale selon l'une quelconque des revendications précédentes pour laquelle au moins une bandelette (3, 202) de film comporte une découpe en croix collée sur une face de la membrane sur des diagonales de la membrane, ladite bandelette en croix et la membrane sous cette bandelette formant un boudin gonflable.

5. Voilure spatiale selon la revendication 1 pour laquelle la structure gonflable est réalisée à partir d'une membrane carrée et comporte deux bandelettes de film (2, 3), une première bandelette (2) étant collée sur une première face de la membrane sur une première diagonale de la surface carrée, ladite première bandelette (2) et la membrane (1) sous cette bandelette formant un premier boudin gonflable, et une seconde bandelette (3) étant collée sur une seconde face de la membrane opposée à ladite première face sur la seconde diagonale de la surface carrée, la seconde bandelette (3) et la membrane (1) sous cette bandelette formant un second boudin gonflable.

6. Voilure spatiale selon la revendication 5 pour laquelle la membrane (1) est percée au centre du carré (5) pour mettre en communication les premier et second boudins gonflables.

7. Voilure spatiale selon la revendication 1 pour laquelle la structure gonflable est réalisée à partir d'une membrane de surface carrée et une bandelette de film en croix (2b) collée sur une face de la membrane sur les diagonales de la surface carrée, ladite bandelette en croix (2b) et la membrane (1) sous cette bandelette formant un boudin gonflable.

8. Voilure spatiale selon l'une quelconque des revendications précédentes pour laquelle la structure gonflable comporte un dispositif de gonflage (7) au centre de la structure gonflable.

9. Voilure spatiale selon la revendication 8 pour laquelle le dispositif de gonflage (7) comporte une valve ainsi qu'un embout tubulaire (6) perpendiculaire à la membrane et qui se fixe sur une bandelette (2).

10. Voilure spatiale selon la revendication 9 pour laquelle l'embout tubulaire (6) prolonge un mât télescopique (8) de déploiement de la voilure.

11. Voilure spatiale selon l'une quelconque des revendications précédentes pour laquelle la voilure est un constituant d'une antenne, d'un panneau solaire, d'une voile d'aérofreinage ou d'une voile solaire d'un engin spatial (9).

12. Procédé de pliage d'une voilure spatiale selon l'une quelconque des revendications précédentes **caractérisé en ce qu'**il comprend une première succession de pliages en zigzag de la membrane parallèlement à une première diagonale (20) de la membrane jusqu'à réaliser une bande autour de ladite première diagonale puis une seconde succession de pliages en zigzag de la membrane perpendiculairement à ladite première diagonale jusqu'à laisser apparente une surface de recouvrement des bandelettes (2, 3, 201, 202, 301, 302) sur la membrane, ladite surface de recouvrement étant porteuse d'un embout (6) de gonflage du dispositif.

13. Procédé de pliage d'une voilure spatiale selon la revendication 12 pour lequel la première succession de pliages (Pa1, ... , Pa9) se fait parallèlement à la première diagonale, commence par le pliage en zigzag d'une première aile (1a) de la membrane (1) d'un premier côté de ladite première diagonale au moyen de pliages (Pa1, ... , Pa5) qui replient ladite aile sur une bande de la largeur de la bandelette (3) autour de ladite première diagonale et se termine par le pliage en zigzag de la seconde aile (1b) de l'autre côté de la première diagonale (20) au moyen de pliages (Pa6, ... , Pa9) qui replient la seconde aile par dessus la première aile repliée.

14. Procédé de pliage d'une voilure spatiale selon la revendication 12 pour lequel la première succession de pliages est réalisée parallèlement à l'axe de la première diagonale (20) et les ailes (1a, 1b) sont pliées ensemble en zigzag.

15. Procédé de pliage d'une voilure spatiale selon la revendication 12 pour lequel, un pas correspondant à la largeur d'une bandelette (2) disposée sur la première diagonale (22), la première succession de pliages comporte le pliage d'une première aile (121) selon des plis en zigzag (Pd1, ..., Pd6) parallèles à la première diagonale (22) sur une bande de largeur 1/2 pas d'un premier côté de la première diagonale, la première succession de pliages comportant le pliage d'une seconde aile (122) selon des plis en zigzag (Pd7, ..., Pd12) sur une bande de largeur 1/2 pas d'un second côté de la première diagonale (22) de sorte que les deux ailes soient pliées côte à côte.

16. Procédé de pliage d'une voilure spatiale selon l'une quelconque des revendications 12 à 15 pour lequel la seconde succession de pliages est réalisée perpendiculairement à la première diagonale (22), des bras (101, 102) de la bande de part et d'autre de la seconde diagonale étant pliés ensemble en zigzag (Pc1, ... , Pc5).

17. Procédé de pliage d'une voilure spatiale selon l'une quelconque des revendications 12 à 15 pour lequel la seconde succession de pliages est réalisée parallèlement à la seconde diagonale (21) et comporte le pliage d'un premier bras (101) selon des plis en zigzag (Pb1, ..., Pb4) puis le pliage d'un un second bras (102) selon des plis en zigzag (Pb5, ..., Pb7) sur le premier bras.

18. Procédé de pliage d'une voilure spatiale selon l'une quelconque des revendications 12 à 15 pour lequel la seconde succession de pliages comporte un pliage séparé en parallèle de bras (131, 132) de part et d'autre de la première diagonale selon des plis en zigzag (Pe1, ..., Pe10).

## Patentansprüche

1. Weltraum-Tragfläche, die mittels einer eine polygonale Fläche (1, 200, 300) bildenden Membran hergestellt wird, die mit einer aufblasbaren Struktur (1, 2, 3, 201, 202, 301, 302) versehen ist, welche Gurte aufweist, die sich auf der Membran gemäß Diagonalen der Membran erstrecken und durch einen Mittelpunkt der Membran verlaufen, **dadurch gekennzeichnet, dass** die aufblasbare Struktur mindestens ein Folienbändchen (2, 3, 201, 202, 301, 302) aufweist, dessen Umriss auf die Membran geklebt wird, um mit der Membran ein aufblasbares Volumen zu bilden und die Dehnungsgurte der Membran herzustellen.

2. Weltraum-Tragfläche nach Anspruch 1, wobei die polygonale Membran mittels einer aufblasbaren Struktur entfaltet wird, die mindestens zwei Folienbändchen aufweist, wobei ein erstes Bändchen (2, 201, 301) auf einer ersten Seite der Membran auf eine erste Diagonale der Membran geklebt wird, wobei das erste Bändchen und die Membran unter diesem Bändchen einen ersten aufblasbaren Wulst bilden, und ein zweites Bändchen (3, 202, 302) auf einer zweiten Seite der Membran gegenüber der ersten Seite auf eine oder mehrere zweite Diagonalen der Membran geklebt wird, wobei das zweite Bändchen und die Membran unter diesem Bändchen einen zweiten aufblasbaren Wulst bilden.

3. Weltraum-Tragfläche nach Anspruch 1 oder 2, wobei die Membran in der Mitte des Polygons durchbohrt ist, um den ersten und den zweiten aufblasbaren Wulst in Verbindung zu bringen.

4. Weltraum-Tragfläche nach einem der vorhergehenden Ansprüche, wobei mindestens ein Folienbändchen (3, 202) einen kreuzförmigen Zuschnitt aufweist, der auf einer Seite der Membran auf Diagonalen der • Membran geklebt wird, wobei das kreuzförmige Bändchen und die Membran unter diesem Bändchen einen aufblasbaren Wulst bilden.

5. Weltraum-Tragfläche nach Anspruch 1, wobei die aufblasbare Struktur ausgehend von einer quadratischen Membran hergestellt wird und zwei Folienbändchen (2, 3) aufweist, wobei ein erstes Bändchen (2) auf einer ersten Seite der Membran auf eine erste Diagonale der quadratischen Fläche geklebt wird, wobei das erste Bändchen (2) und die Membran (1) unter diesem Bändchen einen ersten aufblasbaren Wulst bilden, und ein zweites Bändchen (3) auf einer zweiten Seite der Membran gegenüber der ersten Seite auf die zweite Diagonale der quadratischen Fläche geklebt wird, wobei das zweite Bändchen (3) und die Membran (1) unter diesem Bändchen einen zweiten aufblasbaren Wulst bilden.

6. Weltraum-Tragfläche nach Anspruch 5, wobei die Membran (1) in der Mitte des Quadrats (5) durchbohrt ist, um den ersten und den zweiten aufblasbaren Wulst in Verbindung zu bringen.

7. Weltraum-Tragfläche nach Anspruch 1, wobei die aufblasbare Struktur ausgehend von einer Membran mit quadratischer Fläche und einem kreuzförmigen Folienbändchen (2b) hergestellt wird, das auf einer Seite der Membran auf die Diagonalen der quadratischen Fläche geklebt wird, wobei das kreuzförmige Bändchen (2b) und die Membran (1) unter diesem Bändchen einen aufblasbaren Wulst bilden.

8. Weltraum-Tragfläche nach einem der vorhergehenden Ansprüche, wobei die aufblasbare Struktur eine Aufblasvorrichtung (7) in der Mitte der aufblasbaren Struktur aufweist.

9. Weltraum-Tragfläche nach Anspruch 8, wobei die Aufblasvorrichtung (7) ein Ventil sowie einen Rohrstutzen (6) lotrecht zur Membran aufweist, der an einem Bändchen (2) befestigt wird.

10. Weltraum-Tragfläche nach Anspruch 9, wobei der Rohrstutzen (6) einen Teleskopmast (8) zur Entfaltung der Tragfläche verlängert.

11. Weltraum-Tragfläche nach einem der vorhergehenden Ansprüche, wobei die Tragfläche ein Bestandteil einer Antenne, eines Solarpaneels, eines Luftbremssegels oder eines Sonnensegels eines Raumfahrzeugs (9) ist.

12. Verfahren zum Falten einer Weltraum-Tragfläche nach einem der vorhergehenden Ansprüche, **dadurch gekennzeichnet, dass** es eine erste Folge von Zickzackfaltungen der Membran parallel zu einer ersten Diagonalen (20) der Membran bis zur Herstellung eines Bands um die erste Diagonale, dann eine zweite Folge von Zickzackfaltungen der Membran lotrecht zur ersten Diagonalen aufweist, bis eine Überlappungsfläche der Bändchen (2, 3, 201, 202, 301, 302) auf der Membran sichtbar gemacht wird, wobei die Überlappungsfläche einen Füllstutzen (6) der Vorrichtung trägt.

13. Verfahren zum Falten einer Weltraum-Tragfläche nach Anspruch 12, wobei die erste Folge von Faltungen (Pa1, ..., Pa9) parallel zur ersten Diagonalen erfolgt, durch das Zickzackfalten eines ersten Flügels (1a) der Membran (1) auf einer ersten Seite der ersten Diagonalen mittels Faltungen (Pa1, ..., Pa5) beginnt, die den Flügel auf ein Band der Breite des Bändchens (3) um die erste Diagonale umfalten, und durch das Zickzackfalten des zweiten Flügels (1b) auf der anderen Seite der ersten Diagonalen (20) mittels Faltungen (Pa6, ..., Pa9) endet, die den zweiten Flügel über den ersten umgefalteten Flügel umfalten.

14. Verfahren zum Falten einer Weltraum-Tragfläche nach Anspruch 12, wobei die erste Folge von Faltungen parallel zur Achse der ersten Diagonalen (20) durchgeführt wird und die Flügel (1a, 1b) zusammen zickzackförmig gefaltet werden.

15. Verfahren zum Falten einer Weltraum-Tragfläche nach Anspruch 12, wobei, wenn eine Teilung der Breite eines auf der ersten Diagonalen (22) angeordneten Bändchens (2) entspricht, die erste Folge von Faltungen das Falten eines ersten Flügels (121) gemäß Zickzackfalten (Pd1, ..., Pd6) parallel zur ersten Diagonalen (22) auf einem Band einer Breite von 1/2 Teilung auf einer ersten Seite der ersten Diagonalen aufweist, wobei die erste Folge von Faltungen das Falten eines zweiten Flügels (122) gemäß Zickzackfalten (Pd7, ..., Pd12) auf einem Band einer Breite von 1/2 Teilung auf einer zweiten Seite der ersten Diagonalen (22) aufweist, so dass die zwei Flügel nebeneinander gefaltet sind.

16. Verfahren zum Falten einer Weltraum-Tragfläche nach einem der Ansprüche 12 bis 15, wobei die zweite Folge von Faltungen lotrecht zur ersten Diagonalen (22) durchgeführt wird, wobei Arme (101, 102) des Band zu beiden Seiten der zweiten Diagonalen zusammen zickzackförmig gefaltet werden (Pc1, ..., Pc5) .

17. Verfahren zum Falten einer Weltraum-Tragfläche nach einem der Ansprüche 12 bis 15, wobei die zweite Folge von Faltungen parallel zur zweiten Diagonalen (21) durchgeführt wird und das Falten eines ersten Arms (101) gemäß Zickzackfalten (Pb1, ..., Pb4), dann das Falten eines zweiten Arms (102) gemäß Zickzackfalten (Pb5, ..., Pb7) auf den ersten Arm aufweist.

18. Verfahren zum Falten einer Weltraum-Tragfläche nach einem der Ansprüche 12 bis 15, wobei die zweite Folge von Faltungen ein getrenntes paralleles Falten von Armen (131, 132) zu beiden Seiten der ersten Diagonalen gemäß Zickzackfalten (Pe1, ..., Pe10) aufweist.

## Claims

1. A space wing produced by means of a membrane forming a polygonal surface (1, 200, 300) provided with an inflatable structure (1, 2, 3, 201, 202, 301, 302) which comprises ribs extending over the membrane along diagonals of the membrane and passing through a central point of the membrane, **characterized in that** the inflatable structure comprises at least one film strip (2, 3, 201, 202, 301, 302), the contour thereof being adhesively bonded to the membrane so as to form an inflatable volume with the membrane and to produce extension ribs of the membrane.

2. The space wing as claimed in claim 1, wherein the polygonal membrane is unfolded by means of an inflatable structure comprising at least two film strips, a first strip (2, 201, 301) being adhesively bonded to a first face of the membrane on a first diagonal of the membrane, said first strip and the membrane below said strip forming a first inflatable tube, and a second strip (3, 202, 302) being adhesively bonded to a second face of the membrane opposing said first face on one or more second diagonals of the membrane, the second strip and the membrane below this strip forming a second inflatable tube.

3. The space wing as claimed in claim 1 or 2, wherein the membrane is perforated in the center of the polygon to place the first and second inflatable tubes in communication with one another.

4. The space wing as claimed in any one of the preceding claims, wherein at least one film strip (3, 202) comprises a cross-shaped cut-out adhesively bonded to a face of the membrane on diagonals of the membrane, said cross-shaped strip and the membrane below said strip forming an inflatable tube.

5. The space wing as claimed in claim 1, wherein the inflatable structure is produced from a square membrane and comprises two film strips (2, 3), a first strip (2) being adhesively bonded to a first face of the membrane on a first diagonal of the square surface, said first strip (2) and the membrane (1) below said strip forming a first inflatable tube and a second strip (3) being adhesively bonded to a second face of the membrane opposing said first face on the second diagonal of the square surface, the second strip (3) and the membrane (1) below said strip forming a second inflatable tube.

6. The space wing as claimed in claim 5, wherein the membrane (1) is perforated at the center of the square (5) to place the first and second inflatable tubes in communication with one another.

7. The space wing as claimed in claim 1, wherein the inflatable structure is produced from a membrane having a square surface and a cross-shaped film strip (2b) adhesively bonded to a face of the membrane on the diagonals of the square surface, said cross-shaped strip (2b) and the membrane (1) below said strip forming an inflatable tube.

8. The space wing as claimed in any one of the preceding claims, wherein the inflatable structure comprises an inflating device (7) in the center of the inflatable structure.

9. The space wing as claimed in claim 8, wherein the inflating device (7) comprises a valve and a tubular end piece (6) perpendicular to the membrane and which is fixed to a strip (2).

10. The space wing as claimed in claim 9, wherein the tubular end piece (6) extends a telescopic mast (8) for deployment of the wing.

11. The space wing as claimed in any one of the preceding claims, wherein the wing is a constituent part of an antenna, a solar panel, an airbrake sail or a solar sail of a spacecraft (9).

12. A method for folding a space wing as claimed in any one of the preceding claims, **characterized in that** it comprises a first series of foldings of the membrane in the manner of a concertina, parallel to a first diagonal (20) of the membrane until a band is produced about said first diagonal, then a second series of foldings of the membrane in the manner of a concertina, perpendicular to said first diagonal until an overlapping surface of the strips (2, 3, 201, 202, 301, 302) on the membrane is left free, said overlapping surface bearing an end piece (6) for inflating the device.

13. The method for folding a space wing as claimed in claim 12, wherein the first series of foldings (Pa1, ..., Pa9) is carried out parallel to the first diagonal, said method starts by folding a first wing (1a) of the membrane (1) in the manner of a concertina on a first side of said first diagonal by means of foldings (Pa1,..., Pa5) which fold said wing on a band having a width of the strip (3) about said first diagonal and the method is terminated by folding the second wing (1b) in the manner of a concertina on the other side of the first diagonal (20) by means of foldings (Pa6,..., Pa9) which fold the second wing on the first folded wing.

14. The method for folding a space wing as claimed in claim 12, wherein the first series of foldings is carried out parallel to the axis of the first diagonal (20) and the wings (1 a, 1b) are folded together in the manner of a concertina.

15. The method for folding a space wing as claimed in claim 12, wherein as one increment corresponds to the width of a strip (2) arranged on the first diagonal (22), the first series of foldings comprises the folding of a first wing (121) along the folds in the manner of a concertina (Pd1, ..., Pd6) parallel to the first diagonal (22) on a band having a width of a 1/2 increment on a first side of the first diagonal, the first series of foldings comprising the folding of a second wing (122) along the folds in the manner of a concertina (Pd7, ..., Pd12) on a band having a width of a 1/2 increment on a second side of the first diagonal (22) so that the two wings are folded side-by-side.

16. The method for folding a space wing as claimed in any one of claims 12 to 15, wherein the second series of foldings is carried out perpendicular to the first diagonal (22), arms (101, 102) of the band on either side of the second diagonal being folded together in the manner of a concertina (Pc1, ..., Pc5).

17. The method for folding a space wing as claimed in any one of claims 12 to 15, wherein the second series of foldings is carried out parallel to the second diagonal (21) and comprises the folding of a first arm (101) along the folds in the manner of a concertina (Pb1,..., Pb4) and then the folding of a second arm (102) along the folds on the first arm in the manner of a concertina (Pb5, ..., Pb7).

18. The method for folding a space wing as claimed in any one of claims 12 to 15, wherein the second series of foldings comprises a separate folding in parallel with arms (131, 132), on either side of the first diagonal along the folds in the manner of a concertina (Pe1, ..., Pe10).
